# EUROPÄISCHE PATENTSCHRIFT

(11) **EP 3 336 135 B1**
(45) Veröffentlichungstag und Bekanntmachung des Hinweises auf die Patenterteilung: **09.02.2022**
(21) Anmeldenummer: 17207346.2
(22) Anmeldetag: 14.12.2017
(51) Int. Cl.: B29C 33/56, C23C 18/12, C23C 18/38, C23C 18/32, C08J 7/12, C23C 18/16

(54) **VERFAHREN ZUR MODIFIZIERUNG VON KUNSTSTOFFOBERFLÄCHEN**
METHOD FOR THE MODIFICATION OF PLASTIC SURFACES
PROCÉDÉ DE MODIFICATION DES SURFACES EN MATIÈRE PLASTIQUE

(30) Priorität: 15.12.2016 DE 102016124434
(43) Veröffentlichungstag der Anmeldung: 20.06.2018
(73) Patentinhaber: Leibniz-Institut für Polymerforschung Dresden e.V., 01069 Dresden (DE)
(72) Erfinder: NAGEL, Jürgen, 01328 Dresden (DE); ZIMMERMANN, Philipp, 01309 Dresden (DE)
(74) Vertreter: Rauschenbach, Marion

(56) Entgegenhaltungen:
- DE-A1-102007 037 079
- DE-A1-102010 040 826
- "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoPa rticleCharacterization(2)_1962085150.pdf

## Beschreibung

Die Erfindung bezieht sich auf die Gebiete der Chemie und des Maschinenbaus und betrifft ein Verfahren zur Modifizierung von Kunststoffoberflächen während eines Formgebungsprozesses. Das Verfahren kann beispielsweise für ein nachfolgendes Lackieren, Beschichten oder Bedrucken von Kunststoffoberflächen mit Metallen eingesetzt werden.

Die Metallisierung von Kunststoffoberflächen erfolgt industriell meist elektrolytisch, indem das Kunststoffformteil nach dem Formgebungsprozess in ein Bad aus einem Salz des zu applizierenden Metalls getaucht wird. Im Bad befindet sich außerdem eine Anode aus dem zu applizierenden Metall. Dieses geht bei der galvanischen Abscheidung in Lösung über und schlägt sich auf dem zu beschichtenden Kunststoffformteil nieder. Üblicherweise werden mehrere Schichten aus unterschiedlichen oder gleichen Metallen aufgetragen. Reduktion- und Oxidationsreaktionen werden dabei durch das Bereitstellen eines elektrischen Stromes ermöglicht. Voraussetzung für diesen Prozess ist jedoch, dass das Kunststoffformteil elektrisch leitfähig ist.

Die Herstellung der elektrischen Leitfähigkeit der Kunststoffformteile für die Metallisierung erfolgt nach dem Stand der Technik nach dem Formgebungsprozess durch Aufbringung von Metallsalzen, die zu Metallkeinem reduziert werden. Darauf wird oft eine erste Metallschicht auf die Oberfläche aufgebracht, auf der dann die Metallisierung erfolgt.

Die Metallisierung von Kunststoffoberflächen setzt eine gute Haftung der Keime und der ersten chemisch applizierten Metallschicht auf der Oberfläche des betreffenden Kunststoffformteiles voraus. Bei Kunststoffen muss dazu zunächst die Oberfläche des Kunststoffformteils modifiziert werden.

Zur Modifizierung der zu beschichtenden Kunststoffoberflächen sind aus dem Stand der Technik mehrere Verfahren bekannt.

So ist bekannt, die Oberfläche von Kunststoffen durch ein Beizverfahren zu modifizieren. Dabei werden üblicherweise CrO₃- oder Cr₂O₃-Verbindungen eingesetzt, die beim Beizen von Acrylnitril-Butadien-Styrol(ABS)-Kunststoffoberflächen Butadien-Domänen im Kunststoff herauslösen. Dadurch entstehen in der Kunststoffoberfläche mikroskopisch kleine Rauheiten, in denen sich beispielsweise Metallkeime mechanisch verkrallen können, was die Adhäsion dieser Schicht erhöht. Nach dem Beizen der Kunststoffoberflächen werden weitere Verfahrensschritte, wie beispielsweise das Spülen mit Wasser und das Bekeimen mit (Edel)metallen durchgeführt. Hierzu kann eine Lösung eines Edelmetallsalzes in Wasser verwendet werden. Die Kunststoffoberfläche wird in die Lösung getaucht und die Edelmetallionen lagern sich in den Rauheiten der Kunststoffoberfläche ab. Danach wird die Kunststoffoberfläche in ein Reduktionsmittelbad getaucht, um die Reduzierung der Edelmetallionen zu Keimen aus diesen Edelmetallen zu realisieren.

Nach der Reduzierung der Edelmetallionen wird chemisch eine Kupfer- oder Nickelschicht auf die bekeimten Oberflächen abgeschieden. Dazu werden die Teile in ein Bad getaucht, das Cu- oder Ni-Ionen, ein Reduktionsmittel sowie einen Stabilisator, der eine Redoxreaktion verhindert, enthält. Üblicherweise sind daneben noch weitere Hilfsstoffe enthalten. Durch Kontakt mit den Edelmetallkeimen wird die Redoxreaktion katalysiert und das Metall (Kupfer oder Nickel) schlägt sich an der Kunststoffoberfläche als Metallpartikel nieder (Heymann, K. et al.: "Kunststoff-Metallisierung: Handbuch für Theorie und Praxis", Eugen G. Leuze Verlag, Saulgau, 1991).

Nachteilig bei dieser Art der Modifikation der Kunststoffoberfläche ist, dass Beizen aus CrO₃- oder Cr₂O₃-Verbindungen toxisch und cancerogen sind, weswegen deren Einsatz in der gesamten Europäischen Union ab September 2017 verboten werden soll und/oder ihr Einsatz einer speziellen fallbezogenen Ausnahmegenehmigung bedarf.

Ein weiterer Nachteil besteht darin, dass mit dem Beizen durch CrO₂- oder Cr₂O₃-Verbindungen nur Kunststoffe modifiziert und dann metallisiert werden können, die Butadien-Domänen enthalten. Das sind vor allem ABS und ABS-haltige Blends.

Aus der DE 20 221 901 U1 ist ein Verfahren zur Vorbehandlung einer zu metallisierenden Kunststoffoberfläche bekannt. Dabei wird eine Lösung zur Vorbehandlung einer zu metallisierenden Kunststoffoberfläche aus 0,1 bis 100 g/l Permanganat, 0,001 bis 10 g/l eines Netzmittels, sowie 1 bis 100 g/l eines Puffers, welcher in einem pH-Bereich von 2 bis 12 arbeitet, eingesetzt.

Nachteilig bei diesem Verfahren ist, dass nur eine verminderte Haftfestigkeit der Metallschicht an der Kunststoffoberfläche vorliegt. Nachteilig ist auch, dass das eingesetzte Mangan als Schwermetall umweltbelastend ist.

Die Plasma- und Coronabehandlung sind die am weitesten verbreiteten Verfahren zur Vorbehandlung von Kunststoffoberflächen für die Metallisierung. Durch elektrische Entladung in Luft (Corona) oder im leichten Vakuum (Plasma) werden die Substrate an der Oberfläche aktiviert, das heißt, durch Bildung polarer Gruppen modifiziert. Dadurch wird eine erhöhte Reaktivität an der Kunststoffoberfläche erzielt. Derart behandelte Kunststoffoberflächen weisen eine bessere Haftung bei den nachfolgenden technologischen Schritten auf (Mehrkomponentenspritzgießtechnik 2000, Springer-VDI-Verlag, Düsseldorf, 2000).

Aus der DE 31 36 574 A1 ist ein Verfahren zum Modifizieren der Oberflächeneigenschaften von Kunststoffformstoffen bekannt, bei dem die Oberfläche des Formstoffes der Einwirkung eines kalten Plasmas ausgesetzt wird, wobei das kalte Plasma bei einem Druck von 0,001 bis 13,3 mbar in einer Gasatmosphäre erzeugt wird, die eine Stickstoff enthaltende organische Substanz enthält. Diese organische Stickstoffverbindung kann ein Amin, ein Amid, ein Diamin oder ein Heterocyclus mit mindestens einem Stickstoffatom im Heteroringsystem sein.

Ein Verfahren zur Modifizierung der Oberflächeneigenschaften von Olefincopolymeren wird in DD 211 802 A1 beschrieben. Durch nachträgliche Modifizierung der Oberflächeneigenschaften von Halbzeugen und Formstoffen auf Basis von Olefinkopolymeren wird eine dauerhafte Verklebbarkeit, Bedruckbarkeit, Metallisierbarkeit und Lackierbarkeit erreicht. Die Oberflächenmodifizierung wird durch chemische Ätzung erzielt.

Mehrere Verfahren zur Herstellung fluorierter Oberflächen von Polymeren werden in DD 280 772 A1, DE 35 11 743 A1 und DE 35 32 086 A1 beschrieben. Die nachträgliche Oberflächenmodifizierung von Formkörpern oder von bahnförmigem Kunststoffmaterial wird durch direkte Einwirkung von Fluor auf die Polymeroberfläche erreicht (Direktfluorierung).

In der DE 40 09 624 A1 wird ein Verfahren zur Aktivierung von Kunststoffoberflächen durch Behandlung mit Siliciumtetrachlorid sowie die Verwendung der mit diesem Verfahren hergestellten Erzeugnisse beschrieben.

In der DE 10 042 566 A1 wird ein Verfahren zur Modifizierung von Kunststoffoberflächen aller Art während oder unmittelbar nach oder nach einem Formgebungsprozess beschrieben, bei dem die Temperatur der Oberfläche des Kunststoffes mindestens die on-set- Temperatur des Reaktionspeaks in der entsprechenden DSC-Kurve ist. Die Modifizierung erfolgt, indem die sich bildende Kunststoffoberfläche oder die sich unmittelbar vorher gebildete Kunststoffoberfläche mit Modifikatorsubstanz(en) in Kontakt gebracht wird, die mit der Oberfläche eine Reaktion eingehen und/oder ganz oder teilweise durch Interdiffusion in die Oberfläche eindringen und/oder auf der Oberfläche aufschmelzen.

Ebenfalls bekannt ist ein Verfahren zum stromlosen Metallisieren eines ABS-Polymers, bei dem die Oberfläche eines Probenkörpers aus ABS in einem ersten Verfahrensschritt mit einer Lösung aus 1-4-Phenylendiammonium-Dichlorhydrid, HCl, NaNO₂ und Acrylsäure modifiziert wird, anschließend der modifizierte Probenkörper in eine ionisierte Lösung aus NH₃, CuSO₄ und 5 H₂O bei Raumtemperatur getaucht wird und nachfolgend die Cu₂+-Ionen in einer NaBH₄ - NaOH-Lösung durch Eintauchen des Probekörpers für 10 min. bei 40°C reduziert werden. Abschließend wird eine Platin-Schicht mittels stromlosen Metallisierens realisiert (Garcia, A. et al.: "ABS Polymer Electroless Plating throug a One-Step Poly(acryl acid) Covalent Grafting", ACS Applied Materials & Interfaces, Vol. 2, No. 4, Seite 1177 -1183, 2010).

Nachteilig bei den aus dem Stand bekannten Lösungen ist, dass die bekannten Verfahren zur Modifizierung von Kunststoffoberflächen aufwendig und umweltbelastend sind.

Die Aufgabe der vorliegenden Erfindung besteht darin, ein Verfahren zur Modifizierung von Kunststoffoberflächen anzugeben, das einfach und umweltfreundlich ist.

Die Aufgabe wird mit der vorliegenden Erfindung gelöst. Vorteilhafte Ausgestaltungen der Erfindung sind Gegenstand der Unteransprüche.

Gelöst wird die erfindungsgemäße Aufgabe durch ein Verfahren zur Modifizierung von Kunststoffoberflächen, bei dem auf die Oberfläche eines Formwerkzeuges in einem Spritzgießprozess mindestens eine Modifikatorsubstanz mindestens teilweise aufgebracht wird, wobei die Modifikatorsubstanz mindestens ein funktionelles Polymer mit reaktiven und funktionellen Gruppen und metallische Ionen oder metallische Ionen und metallische Nanopartikel enthält, und nachfolgend eine Kunststoffschmelze in das Formwerkzeug eingebracht wird, und anschließend das Formteil aus dem Formwerkzeug entnommen wird, wobei metallische Ionen nachfolgend zu metallischen Nanopartikeln reduziert werden, und wobei weitere Verfahrensschritte zur chemischen Abscheidung mindestens einer Metallschicht auf den metallischen Nanopartikeln realisiert werden können.

Vorteilhafterweise werden als Kunststoff ein Polyamid, ein Polylactat, ein Polymethylmethacrylat, ein Polycarbonat, ein Polyethylenterephthalat, ein Polybutylenterephthalat, ein Polyethylen, ein Polypropylen, ein Polystyrol, ein Polyetheretherketon und/oder Blends davon eingesetzt.

Ebenfalls vorteilhaft wird mindestens eine Modifikatorsubstanz eingesetzt, die durch chemische Kopplung an der Kunststoffoberfläche gebunden wird.

Vorteilhaft ist es, wenn als Modifikatorsubstanz Polyacrylsäure, Maleinsäureanhydridcopolymere, Polyethylenimin, Polyvinylamin, Polyallylamin, Polyamidamin, Polyglyverin, Polyvinylalkohol als Homopolymere oder als Copolymere und/oder Pentaerythrith eingesetzt werden, und insbesondere vorteilhaft, wenn Homopolymere oder Copolymere mit Molmassen zwischen 500 und 1Mio. g·mol⁻¹ eingesetzt werden.

Vorteilhafterweise wird die Modifikatorsubstanz mit einer Schichtdicke von 1 nm bis 100 nm aufgebracht.

Von Vorteil ist es, wenn funktionelle Polymer eingesetzt werden, die als funktionelle Gruppen Carbonsäure, Carbonsäureanhydrid, Amine und/oder Acyliumionen aufweisen.

Weiterhin werden vorteilhafterweise metallische Ionen oder metallische Ionen und metallische Nanopartikel aus Pd, Pt, Au, Ru, Rh, Ag, Re, Os, Ir, Hg, Cu und/oder Ni eingesetzt, wobei vorteilhafterweise die metallischen Nanopartikel mit einem mittleren Durchmesser von 0,1 nm bis 100 nm, bevorzugt 1 nm bis 30 nm, eingesetzt werden. In einer besonders vorteilhaften Ausführungsform werden die auf der Oberfläche des Formteils gebundenen metallischen Ionen nach dem Spritzgießprozess durch Tauchen in ein Reduktionsmittel zum Metall reduziert.

Und auch ist es vorteilhaft, wenn mit dem Verfahrensschritte zur chemischen Abscheidung mindestens einer Metallschicht auf den metallischen Nanopartikeln realisiert werden.

Mit dem erfindungsgemäßen Verfahren zur Modifizierung von Kunststoffoberflächen werden die bisher getrennt durchgeführten Verfahrensschritte Formgebung eines Kunststoffteiles, Oberflächenmodifizierung und Anbindung von metallische Ionen oder metallischen Ionen und metallischen Nanopartikeln an der Kunststoffoberfläche in nur einem Verfahrensschritt realisiert, wodurch das Verfahren zur Modifizierung von Kunststoffoberflächen deutlich vereinfacht wird. Außerdem wird ein umweltfreundliches Verfahren bereitgestellt. Das erfindungsgemäße Verfahren kann sowohl bei Spritzgießprozessen für einzelne Kunststoffteile als auch bei Mehrkomponentenspritzgießprozessen eingesetzt werden.

Erreicht wird dies durch ein Verfahren zur Modifizierung von Kunststoffoberflächen, bei dem auf die Oberfläche eines Formwerkzeuges in einem Spritzgießprozess mindestens eine Modifikatorsubstanz mindestens teilweise aufgebracht und nachfolgend eine Kunststoffschmelze in das Formwerkzeug eingebracht wird, anschließend das Formteil aus dem Formwerkzeug entnommen wird, und sofern metallische Ionen auf der Kunststoffoberfläche vorhanden sind, diese nachfolgend zu metallischen Nanopartikeln reduziert.

Die Modifikatorsubstanz enthält ein funktionelles Polymer mit reaktiven und funktionellen Gruppen und metallische Ionen oder metallische Ionen und metallische Nanopartikel.

Während durch die reaktiven Gruppen des funktionellen Polymers eine Kopplung der Modifikatorsubstanz durch chemische Anbindung des funktionellen Polymers an die Kunststoffoberfläche realisiert wird, erfolgt die chemische Anbindung des funktionellen Polymers an der Kunststoffoberfläche durch die reaktiven Gruppen des funktionellen Polymers über Additionsreaktionen. Dies bringt den Vorteil mit sich, dass die Polymerketten des jeweiligen Kunststoffes, und damit die Oberfläche des Kunststoffes, unverändert erhalten bleiben.

Mit dem funktionellen Polymer werden die metallischen Ionen oder metallischen Ionen und metallischen Nanopartikel in der Modifikatorsubstanz ortsfest gebunden und damit während des Spritzgießprozesses an den vorgesehenen Oberflächen des Kunststoffes angeordnet.

Die Applizierung der Modifikatorsubstanz kann beispielsweise durch Aufsprühen, Aufdampfen, Drucken oder Aufstreichen vor dem Formgebungsprozess auf die Oberfläche des Formwerkzeugs erfolgen. Die Modifikatorsubstanz wird vorteilhaft mit einer Schichtdicke von 1 bis 100 nm aufgebracht.

Eine besonders gute chemische Ankopplung der mindestens einen Modifikatorsubstanz erfolgt dann, wenn als Kunststoff ein Polyamid, ein Polylactat, ein Polymethylmethacrylat, ein Polycarbonat, ein Polyethylenterephthalat, ein Polybutylenterephthalat, ein Polyethylen, ein Polypropylen, ein Polystyrol, ein Polyetheretherketon und/oder Blends davon eingesetzt werden.

Eine besonders gute Modifizierung der Kunststoffoberfläche wird außerdem dann erreicht, wenn als Modifikatorsubstanz Polyacrylsäure, Maleinsäureanhydridcopolymere, Polyethylenimin, Polyvinylamin, Polyallylamin, Polyamidamin, Polyglyverin, Polyvinylalkohol als Homopolymere oder als Copolymere und/oder Pentaerythrith eingesetzt wird, wobei vorteilhafterweise bei Homopolymeren oder Copolymeren die Molmassen zwischen 500 und 1Mio. g•mol⁻¹ betragen sollen.

Nach dem Schließen des Spritzwerkzeuges und dem Einspritzen des Kunststoffes erfolgt während des Formgebungsprozesses die Kontaktierung der Modifikatorsubstanz mit der Kunststoffschmelze.

Die Oberfläche des Kunststoffes kann dabei vollständig oder nur partiell durch die Modifikatorsubstanz modifiziert werden.

Bei einer vollflächigen Applizierung der Oberfläche des Formwerkzeuges wird auch die Oberfläche des erzeugten Formteils vollflächig modifiziert. Bei einer partiellen Applizierung der Oberfläche des Formwerkzeuges werden nur die Flächen der Kunststoffoberfläche modifiziert, die mit der partiell applizierten Oberfläche des Formwerkzeuges während des Spritzgießprozesses in Kontakt kommen. Bei den Flächen des Kunststoffes, bei denen keine Modifikatorsubstanz appliziert worden ist, bleiben die Oberflächen unverändert erhalten.

Bei einer nachfolgenden Metallisierung werden nur die modifizierten Bereiche metallisiert, während die ursprüngliche Kunststoffoberfläche in den Bereichen ohne Modifizierung unmetallisiert bleibt.

Dies wird dadurch erreicht, dass nur in den Bereichen der Kunststoffoberfläche, die modifiziert werden, auch eine anschließende aufgebrachte Metallschicht angebunden werden kann. Damit wird es erstmals möglich, mit einem besonders einfachen Verfahren Kunststoffoberflächen in nur einzelnen Bereichen oder auch vollständig zu metallisieren, was bisher nur unter großen Aufwendungen möglich war.

Ein weiterer Vorteil der Erfindung besteht darin, dass die Nachteile bei der Herstellung von Zweikomponentenformteilen aus einer mit einem Metall beschichteten und einer schichtfreien Komponente im Zweikomponentenspritzgießverfahren überwunden werden.

Die funktionellen Gruppen der funktionellen Polymere gehen eine chemische Kopplung mit der Kunststoffoberfläche ein, so dass die Modifikatorsubstanz fest an der Kunststoffoberfläche haftet. Die Auswahl des funktionellen Polymers ist davon abhängig, welcher Kunststoff modifiziert und in einem nachgelagerten Verfahrensschritt metallisiert werden soll.

Als funktionelles Polymer können vorteilhafterweise solche Polymere eingesetzt werden, die als funktionelle Gruppen Carbonsäuren, Carbonsäureanhydrid, Amine und/oder Acyliumionen aufweisen.

Erfindungsgemäß enthält die Modifikatorsubstanz neben dem funktionellen Polymer metallische Ionen oder metallische Ionen und metallische Nanopartikel.

Als metallische Ionen oder metallische Ionen und metallische Nanopartikel werden vorteilhaft Edelmetalle eingesetzt, die in der Spannungsreihe oberhalb von Wasserstoff stehen. Daneben können auch Metalle eingesetzt werden, die in der Spannungsreihe mindestens an der Stelle stehen, wie das im nachfolgenden Schritt chemisch abzuscheidende Metall. Beispiele dafür sind Pd, Pt, Au, Ru, Rh, Ag, Re, Os, Ir, Hg, Cu und/oder Ni.

Die Metalle werden entweder als Ionen im funktionellen Polymer koordinativ oder als Salz gebunden oder als Nanopartikel im funktionellen Polymer absorbiert oder sie besitzen an der Partikeloberfläche adsorbierte Moleküle des funktionellen Polymers. Vorteilhafterweise wird die Modifikatorsubstanz als Lösung partiell oder vollständig auf die Oberfläche des Formwerkzeugs appliziert, wobei anschließend das Lösungsmittel weitgehend verdampft.

Erfindungsgemäß wird die Modifizierung der Kunststoffoberfläche bereits während des Formgebungsprozesses auf der Oberfläche des Kunststoffteiles realisiert.

Sofern die Modifikatorsubstanz metallische Ionen enthält, ist nach der Kopplung der Modifikatorsubstanz auf der Oberfläche des Kunststoffformteiles eine Reduzierung der metallischen Ionen zum Metall notwendig. Die Reduzierung erfolgt dabei in mindestens einem nachgelagerten Verfahrensschritt nach dem Formgebungsprozess.

Möglich ist auch, dass die Modifikatorsubstanz eine kolloide Lösung ist. Das bedeutet, dass die Modifikatorsubstanz neben dem funktionellen Polymer metallische Nanopartikel enthält. In diesem Fall sind keine weiteren Verfahrensschritte zur Reduzierung der Partikel notwendig, sodass nachfolgend auf die absorbierten metallischen Nanopartikel direkt weitere Metallschichten abgeschieden werden können.

Ein wesentlicher Vorteil des erfindungsgemäßen Verfahrens ist, dass in nachfolgenden Metallisierungsverfahren, wie beispielsweise einem Galvanikprozess, die Schritte in Zusammenhang mit der Bekeimung der Kunststoffoberfläche entfallen, da die erfindungsgemäß hergestellten Formteiloberflächen bereits die notwendigen metallischen Keime als metallische Ionen oder metallische Ionen und metallische Nanopartikel aufweisen.

Ein weiterer Vorteil des erfindungsgemäßen Verfahrens zur Modifizierung von Kunststoffoberflächen besteht darin, dass bei diesem Verfahren keine CrO₃- oder Cr₂O₃-Verbindungen zum Beizen der Kunststoffoberfläche mehr eingesetzt werden müssen und auch kein Beizverfahren mehr angewandt werden muss, wodurch die Gesundheitsgefährdung deutlich eingeschränkt und die Umweltbelastungen wesentlich reduziert werden können. Insofern wird mit dem erfindungsgemäßen Verfahren zur Modifizierung von Kunststoffoberflächen ein besonders umweltfreundliches Verfahren bereitgestellt, das im Hinblick auf die zukünftigen europäischen Zulassungsbeschränkungen konventioneller Verfahren eine besonders vorteilhafte Alternative darstellt.

Hinzu kommt, dass bisher nur Kunststoffe mit hohem Gehalt von ABS nach dem klassischen nasschemischen Verfahren metallisiert werden konnten. Mit dem erfindungsgemäßen Verfahren können im Wesentlichen alle thermoplastischen Kunststoffe, die einem Spritzgießprozess unterworfen werden können, erfindungsgemäß modifiziert und nachfolgend chemisch metallisiert werden. Dies erhöht ganz entscheidend die Material- und Designfreiheit. Damit können nunmehr beispielsweise auch transparente Formteile vollflächig oder partiell modifiziert und metallisiert werden, wodurch besondere Effekte der Metallisierung auf den Kunststoffoberflächen realisiert werden können.

Außerdem konnte mit dem erfindungsgemäßen Verfahren überraschend herausgefunden werden, dass die auf die Oberfläche des Kunststoffteiles aufgebrachte Metallschicht eine besonders hohe Haftfestigkeit bei wesentlich geringerer Schädigung der Oberfläche des Kunststoffteiles aufweist. Dies wird dadurch erreicht, dass die chemische Kopplung des funktionellen Polymers spezifisch auf den Kunststoff abgestimmt werden kann, wodurch die Oberfläche des Kunststoffteiles wesentlich geringer geschädigt wird, als beim Beizen mit CrO₃- oder Cr₂O₃-Verbindungen.

Außerdem kann mit dem erfindungsgemäßen Verfahren auf den Einsatz von plasmagestützten Modifizierungsverfahren der Oberfläche des Kunststoffteiles verzichtet werden, welche kosten- und energieintensiv sind und zudem die Oberflächen der Kunststoffe stark schädigen. Auch auf den Einsatz von Beizen mit anderen Schwermetallverbindungen, wie MnO₄⁻ oder Cr(III)-Verbindungen kann aus Umweltaspekten verzichtet werden.

Die Erfindung soll anhand der nachfolgenden Ausführungsbeispiele näher erläutert werden.

### Beispiel 1

Eine wässrige Lösung aus hochverzweigtem Polyethylenimin mit einer molaren Masse von 700 000 g/mol als funktionelles Polymer in der Modifikatorsubstanz und PdCl₂ (0.1 M) als metallische Ionen wird auf die Oberfläche der Kavität eines Spritzgießwerkzeuges mittels Spray-Coating appliziert. Nach dem Verdampfen des Lösungsmittels bildet sich ein dünner PEI-Film mit darin komplexiertem Pd-Salz mit einer Dicke von 30 nm aus. Das Werkzeug wird anschließend geschlossen und eine Schmelze aus Polycarbonat (Bayer Makrolon 2207) in das Werkzeug eingespritzt. Das Werkzeug weist eine Temperatur von 80°C auf. Die eingespritzte Schmelze weist eine Temperatur von 270°C auf. Nach dem Erstarren der Schmelze wird das Kunststoffteil dem Werkzeug entnommen und anschließend einem Galvanikprozess mit folgenden Verfahrensschritten unterzogen:
1. Spülen in de-ionisiertem Wasser
2. Tauchen in eine wässrige Reduktionslösung aus 1M NaBH₄ für 2 Minuten
3. Spülen in de-ionisiertem Wasser
4. Tauchen des Kunststoffteiles in ein Vernickelungsbad (Chemisch Nickel SurTec 970) für 10 Minuten, wodurch eine Ni-Schicht mit einer Schichtdicke von 1 µm abgeschieden wird.

Nach der Trocknung für 10 Minuten bei 60°C zeigt die abgeschiedene Ni-Schicht bei einem durchgeführten Gitterschnitt- und Tesabandabzug-Test den Wert 0. Anschließend können noch weitere Metallschichten aus beispielsweise Cu, Ni oder Cr chemisch oder galvanisch auf der ersten Ni-Schicht abgeschieden werden.

### Beispiel 2

Die wässrige Lösung wie in Beispiel 1 wird mit einer NaBH₄-Lösung (0.01 Ma%) versetzt, wobei kolloidal verteilte Pd-Partikel entstehen. Diese Lösung wird vollständig auf die Oberfläche der Kavität eines Spritzgießwerkzeuges durch Spray-Coating appliziert. Nach dem Verdampfen des Lösungsmittels bildet sich ein dünner Film mit einer Dicke von 30 nm aus. Das Werkzeug wird anschließend geschlossen und eine Schmelze aus Polycarbonat (Bayer Makrolon 2207) in das Werkzeug eingespritzt. Das Werkzeug weist eine Temperatur von 80°C auf. Die eingespritzte Schmelze weist eine Temperatur von 270°C auf. Nach dem die Schmelze erstarrt ist, wird das Kunststoffteil dem Werkzeug entnommen und anschließend einem Galvanikprozess mit folgenden Verfahrensschritten unterzogen:
1. Spülen in de-ionisiertem Wasser
2. Tauchen des Kunststoffteiles in ein wässriges Vernickelungsbad (Chemisch Nickel SurTec 970) für 10 Minuten, wodurch eine Ni-Schicht mit einer Schichtdicke von 1 µm abgeschieden wird.

Nach der Trocknung für 10 Minuten bei 60°C zeigt die abgeschiedene Ni-Schicht bei einem durchgeführten Gitterschnitt- und Tesabandabzug-Test den Wert 0.

Anschließend können noch weitere Metallschichten aus beispielsweise Cu, Ni oder Cr chemisch oder galvanisch auf der ersten Ni-Schicht abgeschieden werden.

## Patentansprüche

1. Verfahren zur Modifizierung von Kunststoffoberflächen, bei dem auf die Oberfläche eines Formwerkzeuges in einem Spritzgießprozess mindestens eine Modifikatorsubstanz mindestens teilweise aufgebracht wird, wobei die Modifikatorsubstanz mindestens ein funktionelles Polymer mit reaktiven und funktionellen Gruppen und metallische Ionen oder metallische Ionen und metallische Nanopartikel enthält, und nachfolgend eine Kunststoffschmelze in das Formwerkzeug eingebracht wird, und anschließend das Formteil aus dem Formwerkzeug entnommen wird, wobei metallische Ionen nachfolgend zu metallischen Nanopartikeln reduziert werden.

2. Verfahren nach Anspruch 1, bei dem nach der Entnahme des Formteils aus dem Formwerkzeug und/oder nach der Reduzierung der metallischen Ionen weitere Verfahrensschritte zur chemischen Abscheidung mindestens einer Metallschicht auf den metallischen Nanopartikeln realisiert werden.

3. Verfahren nach Anspruch 1, bei dem als Kunststoff ein Polyamid, ein Polylactat, ein Polymethylmethacrylat, ein Polycarbonat, ein Polyethylenterephthalat, ein Polybutylenterephthalat, ein Polyethylen, ein Polypropylen, ein Polystyrol, ein Polyetheretherketon und/oder Blends davon eingesetzt werden.

4. Verfahren nach Anspruch 1, bei dem mindestens eine Modifikatorsubstanz eingesetzt wird, die durch chemische Kopplung an der Kunststoffoberfläche gebunden wird.

5. Verfahren nach Anspruch 1, bei dem als Modifikatorsubstanz Polyacrylsäure, Maleinsäureanhydridcopolymere, Polyethylenimin, Polyvinylamin, Polyallylamin, Polyamidamin, Polyglyverin, Polyvinylalkohol als Homopolymere oder als Copolymere und/oder Pentaerythrith eingesetzt werden.

6. Verfahren nach Anspruch 5, bei dem Homopolymere oder Copolymere mit Molmassen zwischen 500 und 1Mio. g•mol⁻¹ eingesetzt werden.

7. Verfahren nach Anspruch 1, bei dem die Modifikatorsubstanz mit einer Schichtdicke von 1 nm bis 100 nm aufgebracht wird.

8. Verfahren nach Anspruch 1, bei dem funktionelle Polymer eingesetzt werden, die als funktionelle Gruppen Carbonsäure, Carbonsäureanhydrid, Amine und/oder Acyliumionen aufweisen.

9. Verfahren nach Anspruch 1, bei dem metallische Ionen und/oder metallische Nanopartikel aus Pd, Pt, Au, Ru, Rh, Ag, Re, Os, Ir, Hg, Cu und/oder Ni eingesetzt werden.

10. Verfahren nach Anspruch 1, bei dem die auf der Oberfläche des Formteils gebundenen metallischen Ionen nach dem Spritzgießprozess durch Tauchen in ein Reduktionsmittel zum Metall reduziert werden.

11. Verfahren nach Anspruch 1, bei dem Verfahrensschritte zur chemischen Abscheidung mindestens einer Metallschicht auf den metallischen Nanopartikeln realisiert werden.

## Claims

1. Method for modifying surfaces of plastics, wherein at least one modifier substance is applied to at least part of the surface of a moulding tool in an injection moulding process, where the modifier substance contains at least one functional polymer having reactive and functional groups and metallic ions or metallic ions and metallic nanoparticles, and a molten plastic is then introduced into the moulding tool and the moulding is subsequently taken from the moulding tool, where metallic ions are then reduced to metallic nanoparticles.

2. Method according to Claim 1, wherein, after the moulding has been taken from the moulding tool and/or after the metallic ions have been reduced, further process steps for chemical deposition of at least one metal layer on the metallic nanoparticles are realized.

3. Method according to Claim 1, wherein a polyamide, a polylactate, a polymethyl methacrylate, a polycarbonate, a polyethylene terephthalate, a polybutylene terephthalate, a polyethylene, a polypropylene, a polystyrene, a polyether ether ketone and/or blends thereof are used as plastic.

4. Method according to Claim 1, wherein at least one modifying substance which is bound by chemical coupling to the surface of the plastic is used.

5. Method according to Claim 1, wherein polyacrylic acid, maleic anhydride copolymers, polyethyelinimine, polyvinylamine, polyallylamine, polyamidamine, polyglycerol, polyvinyl alcohol as homopolymers or as copolymers and/or pentaerythritol are used as modifier substance.

6. Method according to Claim 5, wherein homopolymers or copolymers having molar masses in the range from 500 to 1 million g·mol⁻¹ are used.

7. Method according to Claim 1, wherein the modifier substance is applied in a layer thickness of from 1 nm to 100 nm.

8. Method according to Claim 1, wherein functional polymers which have carboxylic acid, carboxylic anhydride, amines and/or acylium ions as functional groups are used.

9. Method according to Claim 1, wherein metallic ions and/or metallic nanoparticles of Pd, Pt, Au, Ru, Rh, Ag, Re, Os, Ir, Hg, Cu and/or Ni are used.

10. Method according to Claim 1, wherein the metallic ions bound to the surface of the moulding are reduced to metal by dipping into a reducing agent after the injection moulding process.

11. Method according to Claim 1, wherein process steps for chemical deposition of at least one metal layer on the metallic nanoparticles are realized.

## Revendications

1. Procédé pour la modification de surfaces de matière plastique, dans lequel au moins une substance de modification est appliquée au moins partiellement sur la surface d'un outil de moulage dans un processus de moulage par injection, la substance de modification contenant au moins un polymère fonctionnel doté de groupes réactifs et fonctionnels et des ions métalliques ou des ions métalliques et des nanoparticules métalliques, et ensuite une masse fondue de matière plastique est introduite dans l'outil de moulage, et par la suite la pièce moulée est retirée de l'outil de moulage, des ions métalliques étant subséquemment réduits en nanoparticules métalliques.

2. Procédé selon la revendication 1, dans lequel après le retrait de la pièce moulée de l'outil de moulage et/ou après la réduction des ions métalliques, d'autres étapes de procédé pour le dépôt chimique d'au moins une couche métallique sur les nanoparticules métalliques sont réalisées.

3. Procédé selon la revendication 1, dans lequel un polyamide, un polylactate, un poly(méthacrylate de méthyle), un polycarbonate, un poly(téréphtalate d'éthylène), un poly(téréphtalate de butylène), un polyéthylène, un polypropylène, un polystyrène, une polyétheréthercétone et/ou un mélange de ceux-ci sont utilisés en tant que matière plastique.

4. Procédé selon la revendication 1, dans lequel au moins une substance de modification est utilisée qui est liée à la surface de matière plastique par couplage chimique.

5. Procédé selon la revendication 1, dans lequel un poly(acide acrylique), des copolymères d'anhydride d'acide maléique, une polyéthylèneimine, une polyvinylamine, une polyallylamine, une polyamidoamine, une polyglycérine, un poly(alcool vinylique) en tant qu'homopolymères ou en tant que copolymères et/ou le pentaérythritol sont utilisés en tant que substance de modification.

6. Procédé selon la revendication 5, dans lequel des homopolymères ou copolymères dotés de masses molaires comprises entre 500 et 1 Mio g·mole⁻¹ sont utilisés.

7. Procédé selon la revendication 1, dans lequel la substance de modification est appliquée avec une épaisseur de couche de 1 nm à 100 nm.

8. Procédé selon la revendication 1, dans lequel des polymères fonctionnels sont utilisés qui présentent un acide carboxylique, un anhydride d'acide carboxylique, des amines et/ou des ions acylium en tant que groupes fonctionnels.

9. Procédé selon la revendication 1, dans lequel des ions métalliques et/ou des nanoparticules métalliques de Pd, de Pt, de Au, de Ru, de Rh, de Ag, de Re, de Os, de Ir, de Hg, de Cu et/ou de Ni sont utilisé(e)s.

10. Procédé selon la revendication 1, dans lequel, après le processus de moulage par injection, les ions métalliques liés sur la surface de la pièce moulée sont réduits en métal par immersion dans un agent de réduction.

11. Procédé selon la revendication 1, dans lequel des étapes de procédé de dépôt chimique d'au moins une couche métallique sont réalisées sur les nanoparticules métalliques.
